# FASCICULE DE BREVET EUROPEEN

(11) **EP 0 718 582 B1**
(45) Date de publication et mention de la délivrance du brevet: **20.10.1999**
(21) Numéro de dépôt: 95402780.1
(22) Date de dépôt: 11.12.1995
(51) Int. Cl.: F28F 9/02, F28D 9/00, B01D 1/10, B01D 1/22

(54) **Echangeur de chaleur**
Wärmeaustauscher
Heatexchanger

(30) Priorité: 21.12.1994 FR 9415423
(43) Date de publication de la demande: 26.06.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR); NORDON CRYOGENIE SNC, 88194 Golbey (FR)
(72) Inventeur: GERARD, Claude, F-88000 Chantraine (FR); LEHMAN, Jean-Yves, F-94700 Maisons-Alfort (FR)
(74) Mandataire: Jacobson, Claude

(56) Documents cités:
- EP-A- 0 566 435
- DE-A- 1 901 475
- FR-A- 2 665 757
- US-A- 4 773 474
- H. Titze, "Elemente des Apparatebaues", Springer-Verlag, 1963, pages 127 à 129

## Description

La présente invention est relative à un échangeur de chaleur du type décrit dans le préambule de la revendication 1.

Un tel échangeur de chaleur est connu par le DE-A-1 901 475.

L'invention s'applique en particulier aux échangeurs de chaleur, du type thermosiphon ou du type à film ruisselant, traitant au moins un fluide diphasique, tels que les vaporiseurs-condenseurs des installations de distillation d'air, les évaporateurs des groupes frigorifiques, les rebouilleurs des colonnes à distiller, ou encore à certains échangeurs disposés dans des espaces réduits, tels que les échangeurs inter-étages de certains compresseurs.

Dans la première application ci-dessus, les vaporiseurs-condenseurs en question doivent souvent, pour des raisons de sécurité, éviter la vaporisation à sec. De ce fait, le produit vaporisé, par exemple l'oxygène de cuve de la colonne basse pression d'une double colonne de distillation d'air, sort de l'échangeur à l'état diphasique, et doit donc passer par un séparateur de phases qui élimine les gouttelettes de la phase gazeuse et permet de recycler le liquide.

Dans la technique classique de ces échangeurs de chaleur, pour séparer le fluide diphasique en ses deux phases, on le collecte au moyen d'une boîte de sortie de forme générale semi-cylindrique, et on l'envoie via une tuyauterie à un ballon distinct de l'échangeur. Cette solution implique, pour la fabrication de l'échangeur, plusieurs opérations de soudage relativement délicates et conduit à une structure relativement complexe, encombrante et coûteuse.

De même, dans la seconde application ci-dessus, le corps d'échangeur comporte généralement des boîtes semi-cylindriques d'entrée/sortie de fluides à ses deux extrémités, ce qui rend compliqué le raccordement de ces boîtes aux autres constituants du compresseur et rend l'ensemble de l'appareil encombrant.

Le DE-A-1 901 475 décrit un échangeur de chaleur du type précité, qui n'est pas adapté au traitement de fluides sous pression.

Le EP-A-0 566 435 montre très shématiquement un échangeur de chaleur d'un type voisin.

L'invention a pour but de fournir une construction simple d'échangeurs de chaleur du type précité, capable de supporter efficacement les fluides sous pression. A cet effet, elle a pour objet un échangeur de chaleur de ce type, caractérisé par la partie caractérisante de la revendication 1.

L'échangeur de chaleur suivant l'invention peut comporter une ou plusieurs des caractéristiques décrites dans les revendications 2 à 7.

Des exemples de réalisation de l'invention vont maintenant être décrits en regard des dessins annexés, sur lesquels :
- La Figure 1 est une vue schématique de côté d'un échangeur de chaleur conforme à l'invention, suivant une première forme de réalisation;
- la Figure 2 est une vue du même échangeur prise en regardant suivant la flèche II de la Figure 1;
- la Figure 3 représente en perspective le même échangeur;
- la Figure 4 est une vue analogue à la Figure 2 d'une variante du même échangeur;
- la Figure 5 est une vue prise suivant la flèche V de la Figure 4;
- la Figure 6 est une vue de dessus de l'échangeur de la Figure 4;
- la Figure 7 est une vue partielle, analogue à la Figure 1, d'une autre variante du même échangeur;
- la Figure 8 est une vue de dessous de l'échangeur de la Figure 7;
- la Figure 9 est une vue analogue à la Figure 1 d'une autre variante du même échangeur, qui ne fait pas partie de l'invention;
- la Figure 10 est une vue prise suivant la flèche X de la Figure 9;
- la Figure 11 est une vue analogue à la Figure 1 d'un autre variante du même échangeur;
- la Figure 12 est une vue de dessous de l'échangeur de la Figure 11;
- la Figure 13 est une vue analogue à la Figure 1 d'une autre variante du même échangeur;
- la Figure 14 est une vue analogue à la Figure 13 d'une variante;
- la Figure 15 est une vue analogue à la Figure 13 d'une autre variante;
- la Figure 16 est une vue de dessous de l'échangeur de la Figure 15;
- les Figures 17 à 19 sont des vues respectivement analogues aux Figures 2 à 4, la Figure 18 étant prise suivant la flèche XVIII de la Figure 17, ces vues correspondant à une autre forme de réalisation de l'échangeur de chaleur suivant l'invention;
- la Figure 20 est une vue analogue à la Figure 17, montrant l'application de l'invention à un vaporiseur-condenseur du type thermosiphon;
- la Figure 21 est une vue prise suivant la flèche XXI de la Figure 20;
- la Figure 22 est une vue analogue à la Figure 20 d'une variante;
- la Figure 23 est une vue analogue d'une autre variante;
- les Figures 24 à 27 sont des vues schématiques partielles, de côté, illustrant des modifications possibles des échangeurs de chaleur suivant l'invention;
- les Figures 28 et 29 sont des vues de face correspondant respectivement aux Figures 26 et 27;
- la Figure 30 est une vue partielle analogue à la Figure 2 illustrant une variante de cette Figure 2;
- la Figure 31 est une vue partielle analogue à la Figure 15, illustrant une variante de cette Figure 15; et
- la Figure 32 illustre schématiquement une autre application de l'invention.

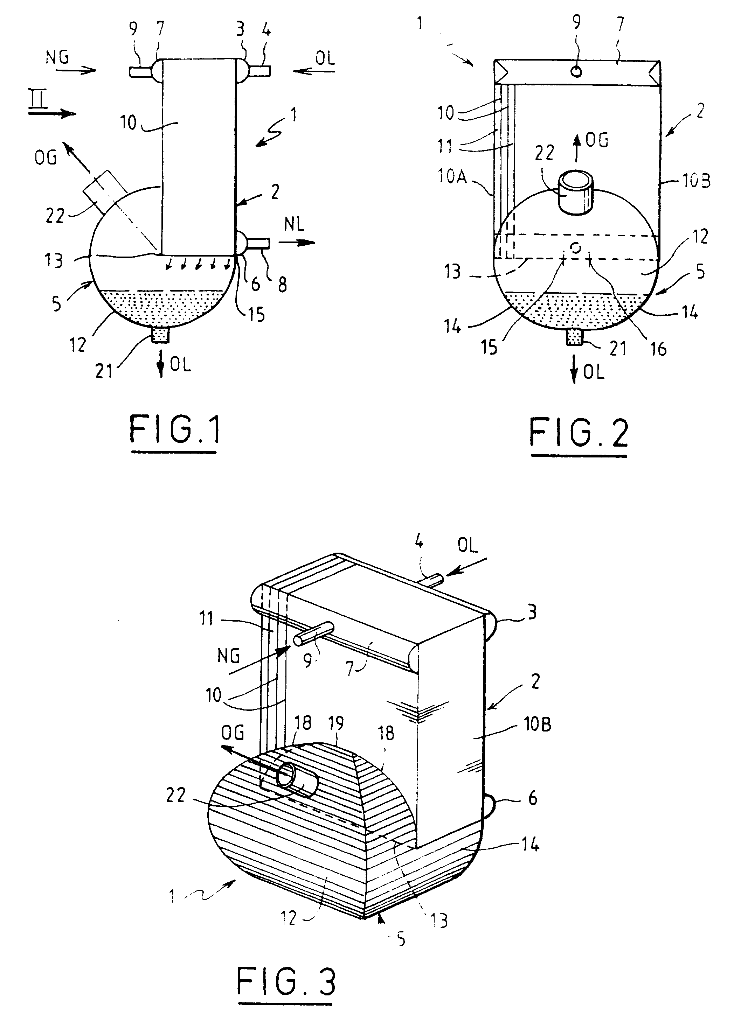

L'échangeur de chaleur 1 représenté schématiquement aux Figures 1 à 3 est par exemple le vaporiseur-condenseur principal d'une double colonne de distillation d'air, du type à film ruisselant, destiné à vaporiser partiellement de l'oxygène liquide sous la pression atmosphérique par condensation d'azote sous une pression de l'ordre de 5 à 6 bars absolus. Un exemple d'un tel vaporiseur-condenseur est décrit dans le EP-A-0 130 122.

L'échangeur 1 comprend un corps d'échangeur 2 de forme parallélépipédique, allongé dans le sens vertical, équipé de divers accessoires. En ce qui concerne un fluide particulier, dit "fluide traité", circulant dans l'échangeur et subissant dans le corps 2 une condensation ou une vaporisation partielle, c'est-à-dire, dans l'exemple considéré, l'oxygène liquide partiellement vaporisé, ces accessoires sont constitués par une boîte d'entrée 3, reliée à une tuyauterie 4 d'alimentation en fluide traité monophasique, et un ballon 5 de séparation en ses phases liquide et vapeur du fluide diphasique sortant. Il est prévu également sur le corps 2 une boîte 6 et une boîte 7 servant respectivement à l'entrée et à la sortie d'un fluide auxiliaire (dans cet exemple l'azote) et reliées respectivement à des tuyaux 8 et 9.

Plus particulièrement, le corps 2 est constitué d'un empilement de plaques rectangulaires 10, verticales et parallèles, entre lesquelles sont interposées des ondes-entretoises formant également ailettes thermiques. Chaque paire de plaques 10 délimite un passage de forme générale plate. Il existe au moins deux séries de passages, dont l'une est réservé à la circulation du fluide traité tandis que l'autre sert à faire circuler le fluide auxiliaire.

Sur leur périphérie, les passages sont fermés par des barres 11. Les barres correspondant au fluide traité laissent toutefois libres, sur un côté et en haut du corps 2, une rangée de fenêtres d'entrée de ce fluide, coiffées par la boîte 3. De plus, les barres 11 correspondant au même fluide sont supprimées sur toute la face inférieure du corps 2.

En ce qui concerne le fluide auxiliaire, les barres 11 laissent libres une rangée de fenêtres d'entrée du même côté que la boîte 3 mais en bas du corps 2, ces fenêtres étant coiffées par la boîte 6. Elles laissent également libres, de l'autre côté et en haut du corps 2, une rangée de fenêtres de sortie coiffées par la boîte 7.

Le corps 2 est réalisé par empilement des plaques, entretoises et barres, et brasage au four en une seule étape. Les boîtes d'entrée-sortie 3, 6, 7 ont une forme générale semi-cylindrique. Elles sont rapportées sur le corps 2 par soudage, de même que le ballon 5, qui va maintenant être décrit.

Le ballon 5 est réalisé par assemblage soudé de trois tôles cylindriques à base circulaire : d'une part, une tôle médiane 12 dont l'axe est confondu avec l'intersection horizontale 13 de la face inférieure du corps 2 avec la face verticale de ce corps opposée aux boîtes 3 et 6, le rayon de cette tôle étant égale à la largeur L des plaques 10 (Figure 1). D'autre part, deux tôles latérales 14, également de rayon L, d'axes 15, 16 coupant perpendiculairement l'intersection 13 et tangentes, dans leur plan diamétral, à l'extrémité inférieure des deux plaques 10A, 10B extrêmes (Figure 2). Comme on le voit sur les Figures 1 et 3, chaque tôle 14 s'étend, à chaque niveau, entre ses deux points d'intersection avec la tôle médiane 12, laquelle part de l'arête horizontale 15 du corps 2 opposée à l'arête 13 et se termine sur la face verticale opposée de ce corps.

On obtient ainsi un ballon 5 qui présente une large ouverture d'un seul tenant dont le bord est défini comme suit : un contour en U qui suit trois côtés consécutifs de la base du corps 2, à savoir les bords inférieurs des deux plaques extrêmes 10A, 10B et l'arête 15, laquelle est constituée de bords des plaques et de barres 11, et un contour curviligne qui se raccorde aux extrémités du U et qui est constitué (Figure 3) de deux arcs de cercle 18 reliés par un segment de droite 19. Le contour en U est soudé le long des trois arêtes correspondantes du corps 2, et le contour curviligne est soudé sur la face verticale adjacente 20, laquelle est constituée de tranches des plaques 10 et de barres 11. Dans la suite, on désignera la face 20 par "face avant" pour simplifier la description.

On comprend que les passages débouchent librement, à leur base, dans le ballon 5, lequel sert de séparateur de phases et dépasse du corps 2 vers le bas et vers l'avant. L'oxygène liquide recueilli est évacué via un orifice de sortie 21 situé au point bas du ballon, et l'oxygène gazeux est évacué via un orifice de sortie 22 prévu au voisinage de son point haut.

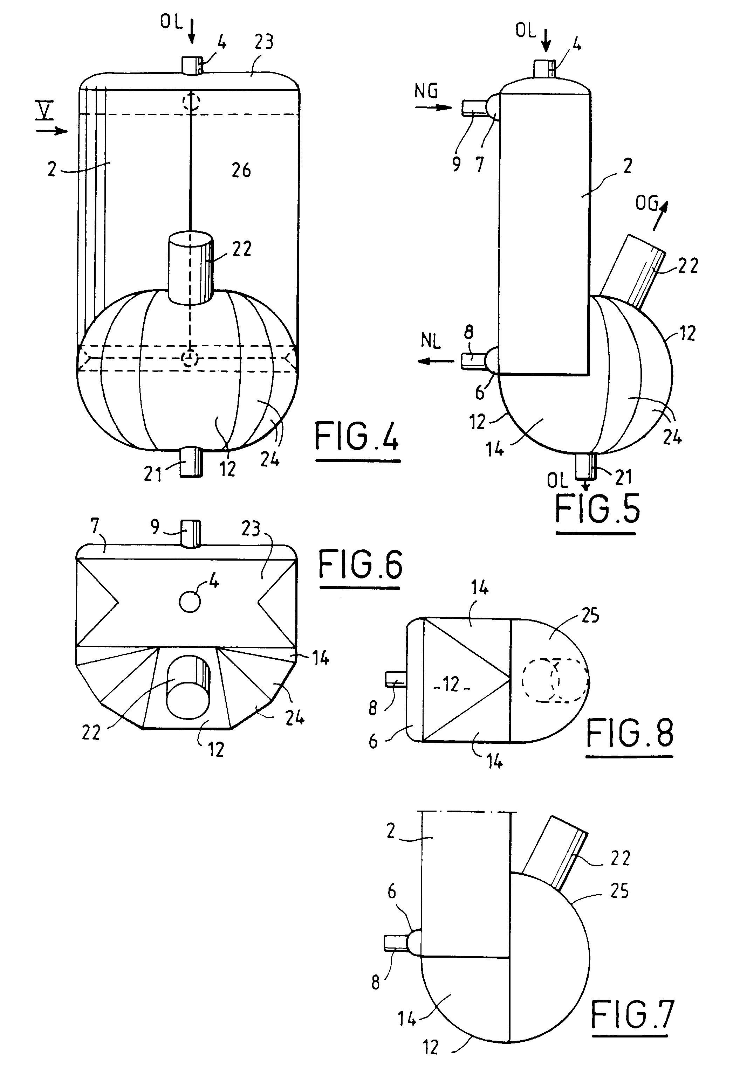

La variante des Figures 4 à 6 ne diffère de la précédente que sous deux aspects :
- d'une part, l'oxygène liquide est introduit au sommet du corps 2 par une boîte d'entrée 23 qui coiffe toute la face supérieure de ce corps;
- d'autre part, le passage des tôles latérales 14 à la tôle médiane 12 s'effectue en plusieurs étapes, au moyen de plusieurs tôles intermédiaires 24 en secteurs cylindriques décalées angulairement, en tranches d'agrumes, les unes par rapport aux autres, à la manière d'un coude de tuyauterie. Dans l'exemple représenté, il y a de chaque côté deux tôles intermédiaires 24, avec un angle de 30° entre les tôles consécutives.

En augmentant à l'infini le nombre de tôles intermédiaires, on aboutit à l'agencement des Figures 7 et 8, où de chaque côté l'ensemble des tôles 14 et 24 est remplacé par un quart de sphère. De plus, sur les Figures 7 et 8, on a confondu les centres des deux quarts de sphère, en supprimant par conséquent un côté de la tôle cylindrique médiane 12, de sorte que la partie en saillie latérale du ballon est une demi-sphère 25.

Cette variante convient particulièrement bien au cas d'un simple corps d'échangeur, d'épaisseur relativement faible, alors que la présence de la tôle 12 permet de s'adapter à volonté aux corps d'échangeur multiples soudés les uns aux autres côte-à-côte, comme on l'a schématisé sur la Figure 4 par la soudure verticale 26, ce qui correspond à un échangeur de chaleur à double corps.

Dans les exemples des Figures 4 à 8, comme aux Figures 1 à 3, la partie du ballon située sous le corps 2 est constituée par trois tôles cylindriques 12, 14 à axes perpendiculaires les uns aux autres, soudées entre elles le long des intersections des cylindres, qui forment un V en vue en plan (Figure 8). Dans la suite, on désignera une telle configuration par une forme "en demi-dôme".

Tous les modes de réalisation décrits jusqu'ici sont adaptés pour être utilisés non seulement, comme c'est le cas pour les vaporiseurs-condenseurs à film ruisselant, lorsque le fluide diphasique est sensiblement à la pression atmosphérique, mais également lorsque ce fluide est sous pression. En effet, la forme, bombée dans toutes les directions, du ballon le rend apte à supporter une pression interne, et de plus sa liaison avec le corps d'échangeur est entièrement réalisée sur des tranches d'extrémité de plaques 10 et sur des barres 11, de sorte que la traction exercée sur le corps du fait de la pression interne du ballon ne s'exerce jamais sur les plaques extrêmes 10A, 10B.

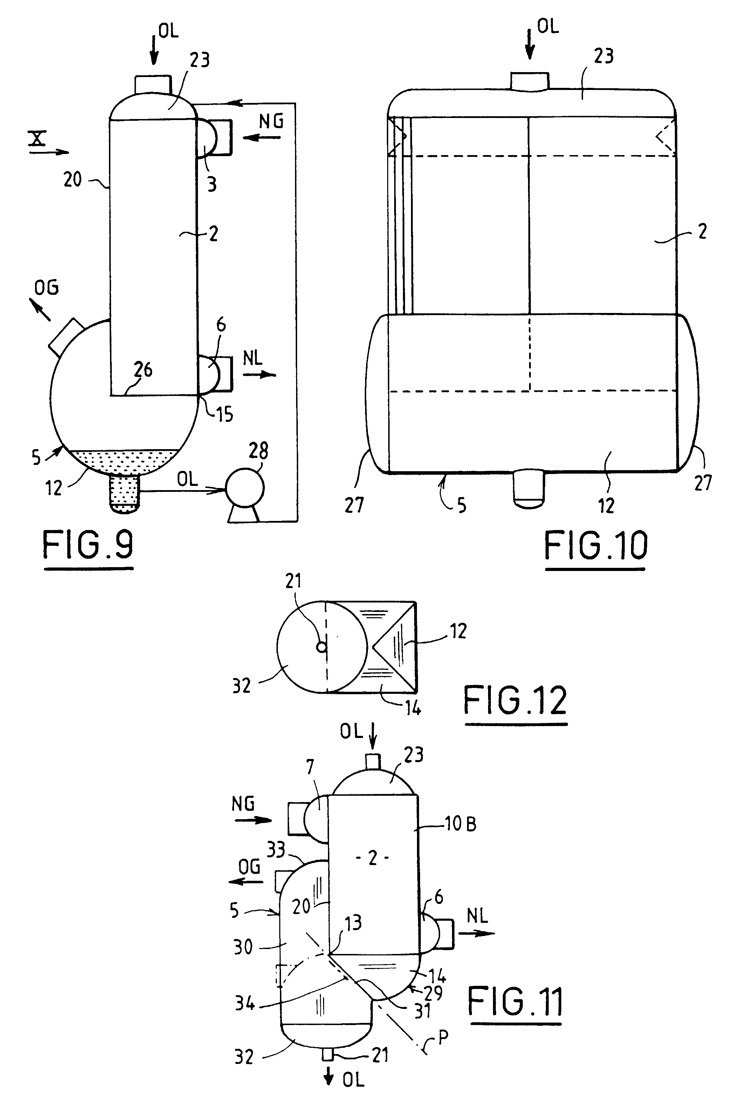

En revanche, pour les applications où le fluide diphasique est à la pression atmosphérique, on peut fixer le ballon sur les plaques 10A, 10B et adopter une structure plus simple pour celui-ci. Ainsi, dans l'exemple des Figures9 et 10, on utilise une simple tôle cylindrique 12 à axe horizontal 26, le cylindre étant tronqué jusqu'à son plan diamétral horizontal par le corps 2 et s'étendant de la plaque 10A à la plaque 10B. Cette tôle est soudée le long du bord inférieur arrière 15 du corps 2 et sur la face avant 20 de ce dernier. A chaque extrémité de la tôle 12, le ballon est fermé par un fond 27 à section axiale en demi-ellipse, soudé sur la tranche d'extrémité de la tôle 12 et sur la plaque 10A ou 10B correspondante. On a aussi indiqué sur la Figure 9 la pompe 28 de remontée de l'oxygène liquide recueilli dans le ballon 5, cette pompe pouvant également être utilisée dans chacun des modes de réalisation décrits plus haut.

Les Figures 11 à 16 représentent d'autres configurations possibles pour le ballon 5, utilisables avec un fluide diphasique à la pression atmosphérique ou sous pression. Toutes ces variantes ont en commun une partie 29 en forme de demi-dôme situé sous la partie arrière du corps 2, sur toute l'épaisseur de celui-ci.

Dans le cas des Figures 11 et 12, les tôles latérales 14 du demi-dôme sont prolongées vers l'avant, et le ballon comporte un cylindre 30 à axe vertical qui coupe le précédent suivant une courbe 31, laquelle se trouve dans un plan P qui passe par l'arête 13 et est incliné vers le bas et vers l'arrière à 45°. Au-dessus de l'arête 13, la moitié du cylindre 30 est tronquée par le corps 2. Sur l'extrémité inférieure du cylindre 30, située à un niveau plus bas que la tôle 14, est soudé un fond à section semi-elliptique 32, tandis que l'extrémité supérieure du cylindre 30 est également tronquée par une autre tôle cylindrique 33 à axe horizontal contenu dans la face 20 pour former un demi-dôme supérieur. Ainsi, l'ensemble 29-30-32-33 constituant le ballon 5 est de nouveau relié au corps 2 uniquement le long des tranches d'extrémité inférieures des plaques 10 et sur la face avant 20.

On a également représenté sur la Figure 11, en traits mixtes, une variante dans laquelle la partie en saillie avant du ballon 5 ne s'élève que jusqu'au niveau de l'arête 13. De plus, une plaque de renforcement 34 contenu dans le plan P peut être rapportée dans le ballon, à partir de cette arête.

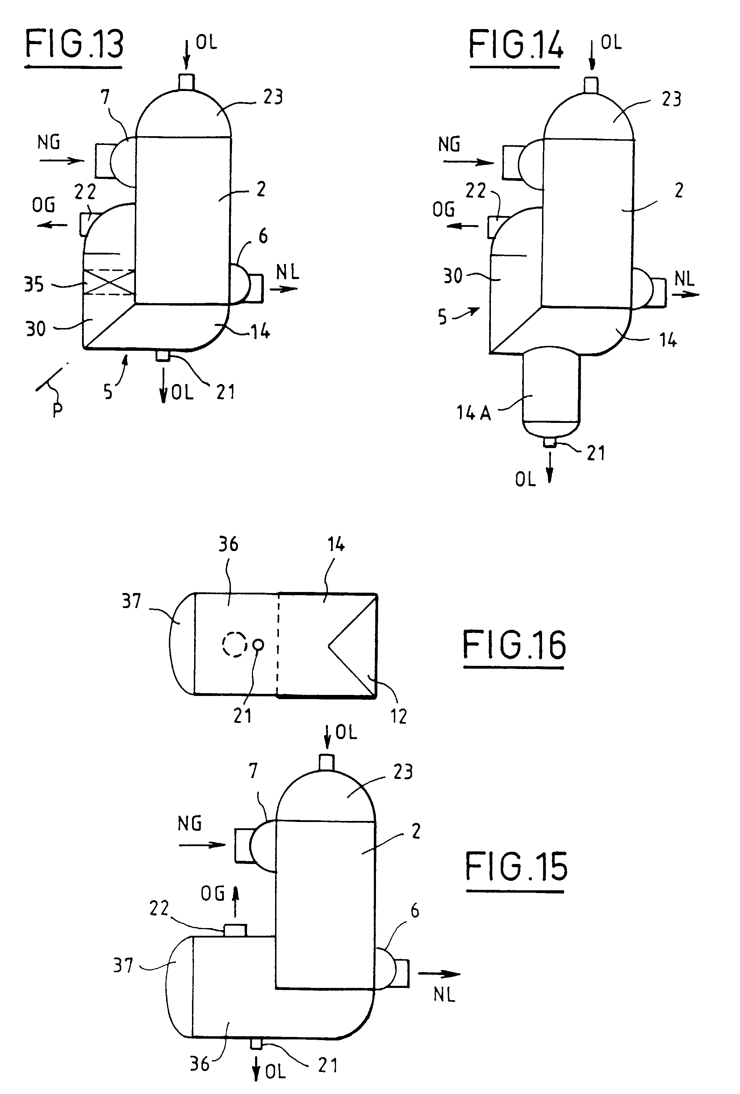

La variante de la Figure 13 ne diffère de la précédente que par le fait que les tôles 14 de la partie 29 sont prolongées en un demi-cylindre unique vers l'avant, de sorte que le plan P est incliné vers le bas et vers l'avant à partir de l'arête 13. On a aussi indiqué un dispositif approprié 35 de séparation de gouttelettes, disposé dans la partie semi-cylindrique du cylindre 30.

La variante de la Figure 14 comprend de plus un appendice 14A qui part vers le bas à partir du point bas de la tôle 14 et qui permet d'augmenter la capacité de stockage de liquide du ballon.

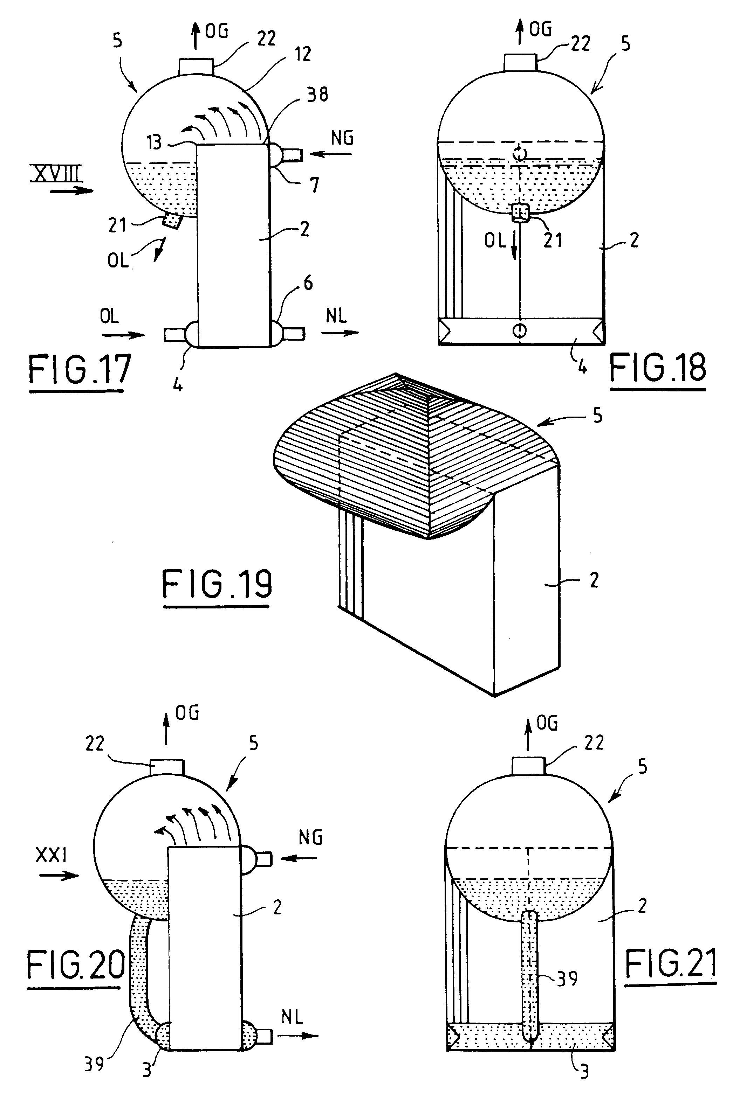

Dans l'exemple des Figures 15 et 16, le cylindre des tôles 14 est prolongé en un cylindre complet 36 à axe horizontal au-delà de la face 20, et est fermé à l'avant par un fond à section semi-elliptique 37.

Les Figures 17 à 27 représentent divers modes de réalisation de l'invention appliqués au cas où le fluide diphasique sort de la face supérieure 38 du corps 2, par exemple pour un vaporiseur-condenseur principal d'une double colonne de distillation d'air du type thermosiphon. Dans chaque cas, le ballon coiffe la totalité de cette face 38 et dépasse sur la face avant 20 du corps 2, de façon à présenter un point haut et un point bas situés respectivement au-dessus et au-dessous de la face 38. De plus, dans chaque cas, le bord du ballon n'est pas soudé sur les plaques d'extrémité 10A, 10B, pour les raisons expliquées plus haut.

Le mode de réalisation des Figures 17 à 19 est obtenu par simple renversement de celui des Figures 1 à 3. Il est toutefois à noter que, dans les vaporiseurs-condenseurs en question, l'azote se condense à contre-courant de l'oxygène, et donc dans le sens descendant de l'échangeur. La Figure 19 a été simplifiée pour ne faire apparaitre que la configuration du corps 2 et du ballon 5.

Dans la variante des Figures 20 et 21, on a simplement ajouté une conduite 39 qui part de l'orifice 21 et qui sert au renvoi de l'oxygène liquide recueilli dans le ballon 5 à la boîte 3 d'entrée d'oxygène liquide dans le corps d'échangeur.

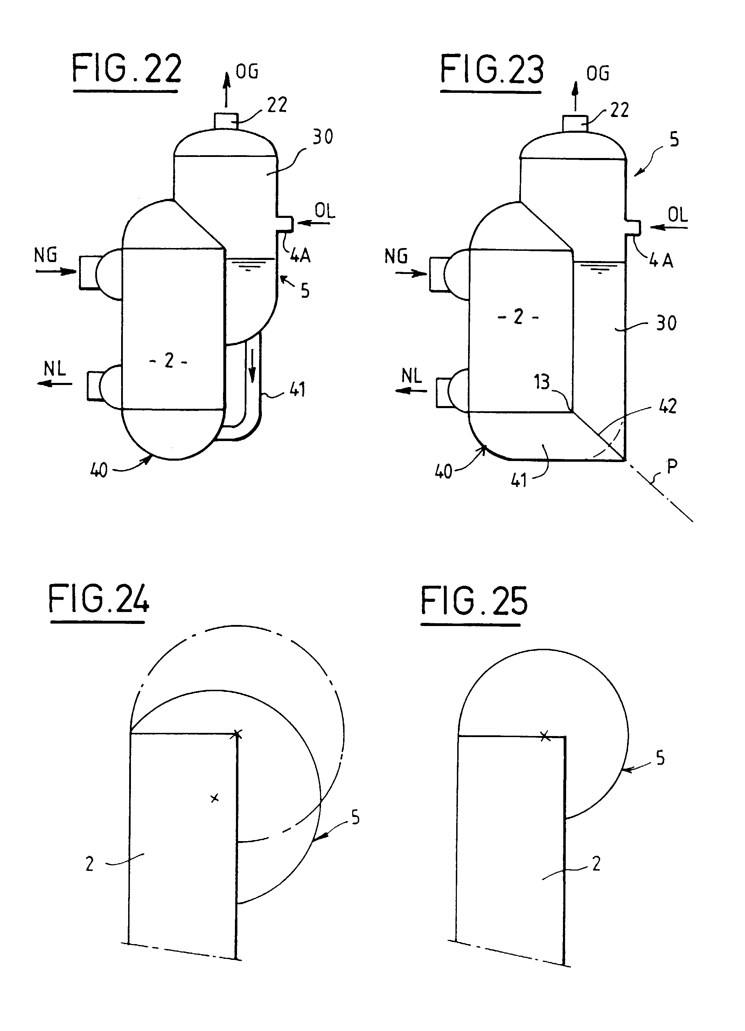

De même, la variante de la Figure 22 est obtenue pour l'essentiel par renversement de celle des Figures 11 et 12, l'oxygène liquide recueilli dans la partie basse du ballon étant renvoyée dans un dôme inférieur 40 de l'échangeur, soudé sur le pourtour de la face inférieur du corps 2, via une conduite 41.

Dans la variante de la Figure 23, le demi-cylindre 30 du ballon est prolongé vers le bas jusqu'à couper le prolongement vers l'avant, semi-cylindrique, des tôles latérales 41 du dôme 40. L'intersection 42 se trouve dans un plan P incliné vers l'avant et vers le bas à partir de l'arête 13. Ainsi, un volume unique de grande section coiffe en totalité les faces supérieure, avant et inférieure du corps 2.

Dans les agencements des Figures 22 et 23, l'oxygène liquide à vaporiser est introduit dans le ballon 5, via une conduite 4A.

Comme indiqué en traits mixtes sur la Figure 23, le passage du demi-cylindre 30 au demi-cylindre 41 peut être progressif, par exemple arrondi.

Les Figures 24 à 31 illustrent des manières dont les formes décrites plus haut peuvent être modifiées: à partir de la forme des Figures 17 à 19, rappelée en traits mixtes sur la Figure 24, on peut décaler le centre du cylindre, en vue latérale, vers le bas et vers l'arrière (Figure 24), ou bien horizontalement et vers l'arrière (Figure 25). Ces modifications permettent de changer la capacité de stockage de liquide et l'encombrement total, dans chaque application particulière.

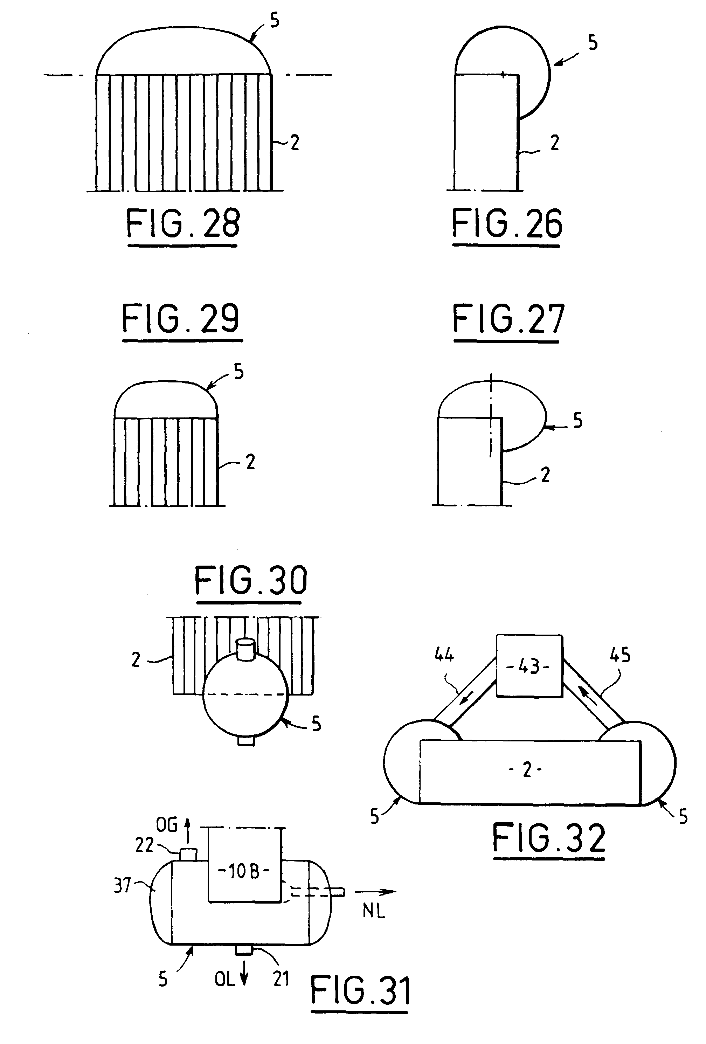

De plus, comme illustré aux Figures 26 à 29, toutes les formes peuvent être déformées par affinité, horizontale ou verticale, dans un sens ou dans l'autre, ce qui transforme les cylindres circulaires en cylindres elliptiques et les sphères en ellipsoides.

Par ailleurs, la largeur du ballon 5 peut être inférieure à l'épaisseur du corps 2 (Figure 30), et/ou le ballon 5 peut dépasser à la fois vers l'avant et vers l'arrière de ce corps (Figure 31).

La Figure 32 montre comment l'invention peut être utilisée avantageusement dans d'autres contextes que le traitement de fluides diphasiques : un corps d'échangeur de chaleur 2, de nouveau du type à plaques brasées, est destiné à chauffer ou refroidir un fluide monophasique arrivant d'un appareil 43, par exemple d'un étage de compresseur, via une conduite 44 et retournant à cet appareil (ou à un autre appareil) via une conduite 45. Grâce à la forme latéralement débordante du ballon 5 prévu à chaque extrémité du corps 2, le raccordement des conduites 44 et 45 est grandement facilité, et l'ensemble a un encombrement réduit. Ceci s'applique bien entendu au cas où une seule extrémité du corps 2 serait équipée d'un ballon 5.

## Revendications

1. Echangeur de chaleur, du type comprenant d'un part une partie de corps (2) en forme de dièdre avec, sur une première face du dièdre, au moins une ouverture d'entrée/sortie d'un fluide, ladite partie de corps (2) étant formée d'un empilement de plaques parallèles (10) définissant entre elles des passages plats, d'ondes-entretoises disposées entre ces plaques et de barres (11) de fermeture des passages, les barres correspondant audit fluide laissant libre ladite ouverture, et d'autre part un bollon (5) d'entrée/sortie de ce fluide coiffant l'ouverture de façon étanche, enjambant l'arête (13,15) du dièdre et relié à joint étanche à chacune des faces du dièdre situées de part et d'autre de ladite arête, caractérisé en ce que le ballon est réalisé par une combinaison de tôles (12, 14; 12, 14, 24; 12, 14, 25; 12, 14, 30, 32, 33; 12, 14, 36; 37) de forme cylindrique, sphérique et/ou ellipsoïdale, soudées entre elles, et n'est relié à ladite partie de corps (2) que sur des faces de celle-ci formées par des tranches d'extrémité de plaques (10) et par des barres (11).

2. Echangeur de chaleur suivant la revendication 1, dans lequel ladite partie de corps (2) forme un second dièdre entre ladite première face et une troisième face adjacente, caractérisé en ce que le ballon (5) fait également saillie, par rapport à ladite partie de corps, au-delà de l'arête (15) du second dièdre, qu'il enjambe.

3. Echangeur de chaleur suivant la revendication 1, caractérisé en ce que le ballon (5) est relié à ladite première face le long de deux lignes perpendiculaires à l'arête (13, 15) du ou de chaque dièdre, notamment le long des deux bords de cette face perpendiculaires à à l'arête.

4. Echangeur de chaleur suivant l'une quelconque des revendications 1 à 3, caractérisé en ce que le ballon est constitué de trois tôles cylindriques (12, 14), les deux tôles extrêmes (14) ayant des axes qui coupent perpendiculairement l'axe de la tôle médiane

5. Echangeur de chaleur suivant l'une quelconque des revendications 1 à 4, constituant un échangeur de chaleur dont ladite partie de corps (2) est parallélépipédique avec ladite première face à son extrémité supérieure ou inférieure, ledit fluide étant un fluide diphasique qui sort de cette partie de corps par ladite ouverture, caractérisé en ce que le ballon (5) comporte une sortie (21) de liquide au voisinage de son point bas et une sortie (22) de gaz au voisinage de son point haut.

6. Echangeur de chaleur suivant la revendication 5, dans lequel ladite première face est la face supérieure de ladite partie de corps, caractérisé en ce que la sortie de liquide (21) est reliée à une entrée de liquide (3) située à un niveau plus bas du corps (2).

7. Echangeur de chaleur suivant la revendication 6, caractérisé en ce que le ballon (5) coiffe également la face inférieure du corps (2), laquelle est pourvue de ladite entrée de liquide.

## Patentansprüche

1. Wärmetauscher des Typs, der einerseits versehen ist mit einem Körperteil (2) in Form eines Zweiflachs, der auf einer ersten Fläche des Zweiflachs wenigstens eine Fluideingangs-/Fluidausgangsöffnung aufweist, wobei der Körperteil (2) gebildet ist aus einem Stapel paralleler Platten (10), die zwischen sich flache Durchlässe definieren, aus Wellen-Abstandshaltern, die zwischen diesen Platten angeordnet sind, sowie aus Stäben (11) zum Verschließen der Durchlässe, wobei die Stäbe, die dem Fluid entsprechen, die Öffnung freilassen, und andererseits versehen ist mit einem Eingangs-/Ausgangsbehälter (5) für dieses Fluid, der die Öffnung dicht abdeckt, eine der Kanten des Zweiflachs überspannt und über eine Dichtung mit jeder der Flächen des Zweiflachs, die sich beiderseits der Kante befinden, verbunden ist, dadurch gekennzeichnet, daß der Behälter aus einer Kombination von Blechen (12, 14; 12, 14, 24; 12, 14, 25; 12, 14, 30, 32, 33; 12, 14, 36, 37) in zylindrischer, sphärischer und/oder ellispoidförmiger Form, die miteinander verschweißt sind, verwirklicht ist und mit dem Körperteil (2) nur an denjenigen seiner Flächen verbunden ist, die durch Platten-Stirnscheiben (10) und durch die Stäbe (11) gebildet sind.

2. Wärmetauscher nach Anspruch 1, in dem der Körperteil (2) zwischen der ersten Fläche und einer dritten benachbarten Fläche ein zweites Zweiflach bildet dadurch gekennzeichnet, daß der Behälter (5) außerdem in bezug auf den Körperteil über die von ihm überspannte Kante (15) des zweiten Zweiflachs vorsteht.

3. Wärmetauscher nach Anspruch 1, dadurch gekennzeichnet, daß der Behälter (5) mit der ersten Fläche längs zweier Linien verbunden ist, die zu der Kante (13, 15) des oder jedes Zweiflachs senkrecht sind, insbesondere längs zweier Ränder dieser Fläche, die zur Kante senkrecht sind.

4. Wärmetauscher nach irgendeinem der vorangehenden Ausprüche 1 bis 3, dadurch gekennzeichnet, daß der Behälter aus drei zylindrischen Blechen (12, 14) gebildet ist, wobei die beiden äußeren Bleche (14) Achsen besitzen, die die Achse des mittleren Blechs (12) senkrecht schneiden.

5. Wärmetauscher nach irgendeinem der Ansprüche 1 bis 4, der einen Wärmetauscher bildet, dessen Körperteil (2) parallelepipedisch ist, wobei sich die erste Fläche an seinem oberen oder unteren Ende befindet, wobei das Fluid ein zweiphasiges Fluid ist, das diesen Körperteil durch die Öffnung verläßt, dadurch gekennzeichnet, daß der Bebälter (5) einen Flüssigkeitsausgang (21) in der Umgebung seines unteren Punkts und einen Gasausgang (22) in der Umgebung seines oberen Punkts enthält.

6. Wärmetauscher nach Anspruch 5, in dem die erste Fläche die obere Fläche des Körperteils ist, dadurch gekennzeichnet, daß der Flüssigkeitsausgang (21) mit einem Flüssigkeitseingang (3) verbunden ist, der sich auf dem untersten Niveau des Körpers (2) befindet.

7. Wärmetauscher nach Anspruch 6, dadurch gekennzeichnet, daß der Behälter (5) außerdem die untere Fläche des Körpers (2) abdeckt, die mit dem Flüssigkeitseingang versehen ist.

## Claims

1. Heat exchanger, of the type comprising on the one hand a body portion (2) in the form of a dihedron with, on a first face of the dihedron, at least one fluid intake/discharge port, said body portion (2) being formed by a stack of parallel plates (10) defining between them flat passages, crosspieces arranged between said plates and bars (11) for closing the passages, the bars corresponding to said fluid leaving free said port, and on the other hand an intake/discharge flask (5) for said fluid tightly covering the port and straddling one of the edges (13, 15) of the dihedron and connected in tightly joining manner to each of the faces of the dihedron, located on other side of said edge, characterized in that the flask is implemented by a combination of sheets (12, 14; 12, 14, 24; 12, 14, 25; 12, 14, 30, 32, 33; 12, 14, 36, 37) having a cylindrical, spherical and/or ellipsoidal shape, which are welded together and is only connected to said body portion (2) on one of the faces thereof formed by end sections of plates (10) and by bars (11).

2. Heat exchanger according to claim 1, wherein said body portion (2) forms a second dihedron between said first face and a third, adjacent face, characterized in that the flask (5) also projects, with repsect to said body portion, beyond the edge (15) of the second dihedron, which it straddles.

3. Heat exchanger according to claim 1, characterized in that the flask (5) is connected to said first face along two lines perpendicular to the edge (13, 15) of the or each dihedron, particularly along two edges of said face perpendicular to the edge.

4. Heat exchanger according to any one of the claims 1 to 3, characterized in that the flask is constituted by three cylindrical sheets (12, 14), the two end sheets (14) having axes perpendicularly intersecting the axis of the median sheet (12).

5. Heat exchanger according to any one of the claims 1 to 4, constituting a heat exchanger, whereof the said body portion (2) is parallelepipedic with said first face at its upper or lower end, said fluid being a two-phase fluid passing out of said body portion by said port, characterized in that the flask (5) has a liquid outlet (21) in the vicinity of its bottom point and a gas outlet (22) in the vicinity of its top point.

6. Heat exchanger according to claim 5, wherein said first face is the upper face of said body portion, characterized in that the liquid outlet (21) is connected to a liquid inlet (3) located at a lower level of the body (2).

7. Heat exchanger according to claim 6, characterized in that the flask (5) also covers the lower face of the body (2), which is provided with said liquid inlet.
